# EUROPÄISCHE PATENTSCHRIFT

(11) **EP 0 662 348 B1**
(45) Veröffentlichungstag und Bekanntmachung des Hinweises auf die Patenterteilung: **18.08.1999**
(21) Anmeldenummer: 95100075.1
(22) Anmeldetag: 04.01.1995
(51) Int. Cl.: B04C 11/00, B01D 45/12, B01D 50/00, G05D 7/06

(54) **Zentrifugalabscheider mit Regelungseinrichtung**
Centrifugal separator with control device
Séparateur centrifuge avec dispositif de régulation

(30) Priorität: 11.01.1994 DE 4400489
(43) Veröffentlichungstag der Anmeldung: 12.07.1995
(73) Patentinhaber: Filtan Filter-Anlagenbau GmbH, D-63505 Langenselbold (DE)
(72) Erfinder: Lorey, Manfred, D-63505 Langenselbold (DE)
(74) Vertreter: Fuchs Mehler Weiss & Fritzsche

(56) Entgegenhaltungen:
- DD-A- 276 815
- DE-A- 2 203 036
- DE-A- 3 416 181
- FR-A- 2 588 779
- US-A- 1 890 070
- US-A- 3 541 593
- US-A- 5 165 236

## Beschreibung

Die Erfindung betrifft einen Zentrifugalabscheider nach dem Oberbegriff des Anspruchs 1 zum Abscheiden von Partikeln oder Tropfen eines dichteren Stoffes aus einem zu reinigenden, flüssigen oder gasförmigen Trägermedium, insbesondere zum Abscheiden von Flüssigkeitstropfen aus einem Gas, insbesondere Luft oder Erdgas, bei dem ein Strom des Mediums durch mindestens zwei an Rohrleitungen angeschlossene Einlaßöffnungen in den Zentrifugalabscheider eingeleitet wird, wobei in diesen Rohrleitungen Mittel zum Regeln des Volumenstroms des zu reinigenden Mediums vorgesehen sind.

Die Erfindung betrifft weiterhin im allgemeineren Sinne eine Vorrichtung zum Abscheiden von Partikeln und Tropfen eines dichteren Stoffes aus einem zu reinigenden Gas, insbesondere zum Abscheiden von Staub sowie Wasser- und Öltropfen aus komprimierter Luft oder Erdgas, mit einem in einer Rohrleitung angeordneten Feststoffilter und mit einem stromab des Feststoffilters angeordneten Zentrifugalabscheider zum Abscheiden von Flüssigkeitstropfen.

Schließlich betrifft die Erfindung ein Verfahren zum Einstellen des Volumenstroms, der einen erfindungsgemäßen Zentrifugalabscheider durchfließt.

In vielen Bereichen der Technik ist es notwendig, ein in einer Rohrleitung fließendes Medium von Bestandteilen eines verunreinigerden Mediums zu säubern. Dabei kann das zu reinigende Medium flüssig sein, in der Mehrzahl der Anwendungsfälle ist es jedoch gasförmig. Die Erfindung ist insbesondere geeignet für Vorrichtungen, in denen ein gasförmiges Medium gereinigt werden soll, es ist jedoch nicht auf diese beschränkt. Ein Beispiel für das technische Gebiet, in dem die Erfindung verwirklicht werden kann, ist insbesondere die Reinigung eines Gases in Druckregelstationen, von wo aus ein Gas in ein Verteilernetz eingespeist wird. Hierzu zählen beispielsweise Druckregelstationen in Erdgasversorgungsstationen oder in Preßluftnetzen, in denen das Erdgas bzw. die komprimierte Luft von Staub und Flüssigkeitsbestandteilen, wie beispielsweise Kondenswasser oder Öl gereinigt werden soll.

In solchen Stationen ist gemäß dem Stand der Technik zunächst ein Feststoffilter vorgesehen, in dem beispielsweise kerzenförmige Filter angeordnet sind, mittels derer die Feststoffpartikel aus dem durchtretenden Gasstrom entfernt werden. Die im Gas enthaltenen Flüssigkeitsdämpfe, die bei einer Entspannung des Gases, beispielsweise aufgrund des über dem Filter auftretenden Druckabfalls, auskondensieren, lassen sich durch den Feststoffilter jedoch nicht entfernen. Daher ist gemäß dem Stand der Technik vorgesehen, stromab des Feststoffilters einen Zentrifugalabscheider anzuordnen, von dem das Gas in eine im wesentlichen kreis- oder spiralförmige Bewegung versetzt wird, wodurch eine Wirbelsenke erzeugt wird. Die Wirbelsenke stellt ein zentrifugales Kraftfeld dar, in dem auch die mit dem Gasstrom eintretenden Flüssigkeitstropfen dabei eine Umfangsgeschwindigkeit aufweisen, die bei einem spiralförmig aufgebauten Zentrifugalabscheider gemäß dem Drallsatz von außen nach innen zunimmt. Mitrotierende Teilchen erfahren eine Zentrifugalkraft und drängen andere Teilchen nach außen. Die Zentrifugalkraft ist proportional der Masse des Teilchens, dem Quadrat der Umfangsgeschwindigkeit sowie umgekehrt proportional dem Radius der momentanen Kreisbewegung. Der Zentrifugalkraft wirken Widerstandskräfte entgegen, weswegen es einen Radius gibt, bei dem die Zentrifugalkraft gleich der Widerstandskraft ist. Ein Teilchen bestimmter Größe bzw. Schwebegeschwindigkeit wird dann dauernd kreisen, während größere Teilchen nach außen wandern und abgeschieden werden. Aus dem gesagten ergibt sich, daß es zur Abscheidung von möglichst kleinen Flüssigkeitstropfen höchst wünschenswert ist, daß große Umfangsgeschwindigkeiten auftreten und daß der Innenradius des Zentrifugalabscheiders möglichst klein ist. Anders ausgedrückt ist es zur Abscheidung von Flüssigkeit aus Gasen wünschenswert, daß die Flüssigkeitstropfen möglichst groß sind.

Prinzipiell gilt also, daß ein Zentrifugalabscheider mit großen Abmessungen einem Zentrifugalabscheider mit kleinen Abmessungen hinsichtlich der Grenzgröße, d.h. dem Kleinsten noch ausgeschiedenen Flüssigkeitstropfen, unterlegen ist. In der Vergangenheit sind deswegen bereits Multizyklone bekannt geworden, die sich aus einzelnen Zertrifugalabscheidern kleinerer Abmessungen zusammensetzen. Insbesondere dort aber, wo große Mengen eines zu reinigenden Gases durchgesetzt werden müssen, sind Zentrifugalabscheider größerer Abmessungen - insbesondere wegen des verringerten Bauaufwandes - bevorzugt worden. Solche Zentrifugalabscheider größerer Abmessungen sind insbesondere dann problematisch, wenn der durchzusetzende Volumenstrom in großer Bandbreite schwankt, d.h. wenn durch ein der Eintrittsöffnung vorgeschaltetes Absperr- und/oder Regelorgan der Volumenstrom gedrosselt wird. Insbesondere bei den erwähnten Anwerdungsfällen, d.h. bei der Reinigung von Erdgas oder Preßluft in Druckregelstationen tritt dann das Problem auf, daß aufgrund der durch das Absperrorgan verursachten Strömungsturbulenzen die in dem Gasstrom enthaltenen Flüssigkeitstropfen soweit zerstäubt werden, daß ihr Durchmesser unter den für den jeweiligen im Hinblick auf den Maximalvolumenstrom dimensionierten Zentrifugalabscheider geltenden Grenzwert sinken; sie also mit anderen Worten nicht abgeschieden werden.

Neben der Verringerung der Tröpfchengröße der abzuscheidenden Flüssigkeit durch Zerstäubung ist es ein weiterer Nachteil der bekannten Anordnung, bei der in einer für den Durchsatz des maximalen Volumenstroms ausgelegten Rohrleitung ein Absperrorgan angeordnet ist, daß die Strömungsgeschwindigkeiten in der Rohrleitung bei kleinen Durchsätzen, d.h. kleinen Volumenströmen klein sind. Damit sind aber auch die Eintrittsgeschwindigkeiten des Gasstromes in den Zentrifugalabscheider klein und dementsprechend sind auch die Umfangsgeschwindigkeiten in der in dem Zentrifugalabscheider erzeugten Wirbelsenke entsprechend klein, so daß zusätzlich zu dem negativen Einfluß, daß die auszuscheidenden Flüssigkeitstropfen durch Zerstäubung verkleinert worden sind, der ungünstige Umstand tritt, daß die auf den jeweiligen Tropfen wirkende, für die Erzeugung einer Zentrifugalkraft proportional maßgebliche Zentripetalbeschleunigung kleiner wird. Dieser letztgenannte Umstand wird insbesondere dadurch verschärft, daß die Zentripetalbeschleunigung quadratisch von der Umfangsgeschwindigkeit abhängt.

Zusammenfassend kann man feststellen, daß Zentrifügalabscheider in den oben beschriebenen Anwendungsfällen aus baulichen Gründen und um Investitionskosten niedrig zu halten für den maximalen Durchfluß ausgelegt werden, sie aber in der aus dem Stand der Technik bekannten Anordnung mit einem vorgeschalteten, in der Zuführleitung liegenden Absperrorgan dann unzufriedenstellend arbeiten, wenn kleine Volumenströme an zu reinigendem Medium eingestellt werden.

In der DD 27 68 15 A wird auf die Abhängigkeit der Abscheideleistung vom Stoffdurchsatz bei Zyklonen hingewiesen. Der Einbau von Klappen oder dergleichen, die den Eintrittsimpuls des Stoffstromes verändern, sei nachteilig, weil damit ein ungünstiger Eingriff in die Strömungsverhältnisse verbunden sei. Es wird vorgeschlagen, daß der gesamte, einem Wirbler zugeführte Stoffstrom vor dem Wirbler durch eine erste Teilung auf zwei oder mehrere Teilströme aufgeteilt wird, von denen mindestens einer über ein Ventil zum Variieren der Teilströme geleitet wird, wobei die Variierung der Teilströme zu gleichen oder ungleichen Teilen erfolgt und anschließend ggf. eine zweite Aufteilung der Teilströme auf wiederum zwei oder mehrere Teilströme erfolgt und die Teilströme über je einen Zuführungskanal in den Wirbler geleitet werden. Die stufenweise Aufteilung des Volumenstromes in immer mehr Teilströme führt jedoch ebenfalls zu nachteiligen Turbulenzen. Da alle Ventile in dieser Anordnung kontinuierlich verstellbar sind, werden in den Teilströmen durch den verengten Strömungsquerschnitt ebenfalls nachteilige Turbulenzen erzeugt.

Aus der DE-OS 22 03 036 ist eine Stelleinrichtung bekannt, die aus einer oder mehreren digitalen Stelleinrichtungen und einer analogen Stelleinrichtung besteht, die getrennt ansteuerbar sind. In einer Ausführungsform wird eine Stelleinrichtung für die Beeinflussung von Stoffströmen beschrieben, wobei mehrere binäre Stellglieder zu Grobverstellungen und eine analoge Stelleinrichtung angeordnet sind. Sämtliche Teilströme werden nach der Aufteilung und somit hinter den Stellgliedern wieder zusammengeführt. Eine Verknüpfüng mit einem Zentrifugalabscheider bzw. dessen Eintrittsöffnungen ist nicht vorgesehen.

Der Erfindung liegt daher die Aufgabe zugrunde, die geschilderten Nachteile durch Schaffung eines Zentrifugalabscheiders zu beheben, der sich durch eine verbesserte Abscheideleistung bei kleineren Durchsätzen sowie durch einen weiterhin vergleichsweise einfachen Aufbau auszeichnet. Der Erfindung liegt weiterhin die Aufgabe zugrunde, den zu erfindenden Zentrifugalabscheider in eine Gesamtanlage zur Reinigung eines Fluidstroms zu integrieren und ein Verfahren zu seiner möglichst ökonomischen Betriebsweise anzugeben.

Die Erfindung ist bei einem gattungsgemäßen Zentrifügalabscheider dadurch gekennzeichnet, daß die Mittel zum Regeln des Volumenstroms in den Rohrleitungen angeordnete Abspertorgane sind, wobei jeder Einlaßöffnung ein Absperrorgan zugeordnet ist, und daß die Einlaßöffnungen unabhängig voneinander geöffnet oder geschlossen werden können, wobei ein Absperrorgan so ausgebildet ist, daß der Querschnitt einer Einlaßöffnung kontinuierlich vergrößert oder verkleinert werden kann, und wobei mindestens ein weiteres Absperrorgan lediglich zwei Stellungen, nämlich eine Abspertstellung und eine Durchflußstellung aufweist, so daß der Querschnitt einer anderen Einlaßöffnung vollständig geschlossen oder geöffnet werden kann.

Unter dem Oberbegriff Absperrorgane sollen sämtliche Armaturen (Rohrschalter) verstanden werden sollen, die in die zu der jeweiligen Einlaßöffnung führende Rohrleitung eingefügt werden können. Es ist also im Sinne der Erfindung unter dem Öffnen oder Verschließen der Einlaßöffnung auch der Fall zu subsummieren, daß die Absperrorgane nicht unmittelbar auf die in der Behälterwandung des Zentrifügalabscheiders liegende Einlaßöffnung bzw. deren Querschnitt einwirken, sondern in einer endlichen Entfernung hiervon in der zu der Einlaßöffnung führenden jeweiligen Rohrleitung angeordnet sind.

Vorteilhaft kann die Erfindung mit jeglicher aus dem Stand der Technik bekannten Form von Absperrorganen ausgeführt werden. Hierzu gehören beispielsweise Ventile, bei denen ein Absperrkörper (Platte, Kegel, Kolben, Kugel) mit einer parallel zur Strömungsrichtung erfolgenden Abhebebewegung einen zylindrischen Ringquerschnitt als Strömungsquerschnitt freigibt. Hierzu gehören aber auch beispielsweise Schieber, bei denen der Absperrkörper quer zur Strömungsrichtung bewegt wird, wie auch Hähne oder Drehschieber, Klappen und so fort.

Durch die erfindungsgemäße Anordnung wird erreicht, daß sich durch vollständiges Schließen jeweils einer Einlaßöffnung bzw. des zu ihr führenden Rohrquerschnittes der Volumenstrom des zu reinigenden Gases o.ä. in sprunghaften Teilschritten einstellen läßt. Sind beispielsweise fünf Rohrleitungen vorgesehen, so sind als einzustellende Volumenströme beispielsweise die Schritte 1/5, 2/5, 3/5, 4/5 und 1/1 des gesamten Volumenstroms einstellbar. Dabei ist vorteilhaft, daß die jeweils ungesperrten Rohrleitungen über den vollständigen Strömungsquerschnitt verfügen, ohne daß ein Absperrorgan den Strömungsquerschnitt teilweise beengt, was zu ungünstigen Strömungsverläufen, insbesondere turbulenten Strömungsabrissen und den damit verbundenen, oben erläuterten nachteiligen Folgen führen würde. Darüber hinaus sind die Strömungsgeschwindigkeiten aufgrund der dem Volumendurchsatz angepaßten Strömungsquerschnitte auch im Bereich hinter den Absperrorganen so klein, daß hohe Strömungsgeschwindigkeiten und damit gute Abscheideeffekte im Zentrifugalabscheider erreicht werden.

Geht man wie bei dem zuvor erläuterten Beispiel davon aus, daß fünf Einzelrohrleitungen gleichen Querschnittes mit entsprechenden Einlaßöffnungen im Zentrifugalabscheider vorgesehen sind, so kann beispielsweise ein Volumenstrom, der das 0,7fache des maximalen Gesamtvolumenstroms beträgt, eingestellt werden, indem drei der mit einfachen Absperrorganen ausgerüsteten Leitungen freigegeben werden, entsprechend einem Volumenstrom von 3/5 des maximal möglichen Volumenstroms; und die vierte Leitung mit einfachem Absperrorgan vollständig gesperrt wird. Die fünfte, mit dem kontinuierlich verfahrbaren Absperrorgan ausgestattet Leitung wird dann auf 50 %, d.h. die halbe Teildurchflußmenge eingestellt, entsprechend 1/10 der maximalen Gesamtdurchflußmenge. Der gesamt durch die Leitungen fließende Volumenstrom an zu reinigendem Gas beträgt dann das 0,7fache des Gesamtvolumenstroms, wovon aber lediglich 1/10 von den negativen Einflüssen des in den Strömungsweg hineingefahrenen Absperrorgans betroffen ist. Dementsprechend kommt es auch nur in diesem Teilbereich zu den oben beschriebenen negativen Auswirkungen, zu denen insbesondere eine Zerstäubung des in dem Gas enthaltenden Flüssigkeitsanteils gehört.

Dabei sei ausdrücklich bemerkt, daß die angestellten Betrachtungen über Volumenströme Idealisierungen darstellen, die nur auf ein inkompressibles Medium voll zutreffen. Bei kompressiblen Medien, wie beispielsweise Erdgas oder Preßluft kommt es zu Abweichungen von dieser Idealisierung, die jedoch die Grundidee der Erfindung keineswegs beeinflussen.

Aus dem oben gesagten ergibt sich weiter, daß die Erfindung in einer bevorzugten Ausführungsform vorteilhafterweise so ausgeführt wird, daß genau ein Absperrorgan kontinuierlich verstellbar ausgebildet ist und die anderen Absperrorgane zwischen einer Absperrstellung und einer Durchflußstellung schaltbar sind.

Weiterhin ist bei einer bevorzugten Ausführungsform der Erfindung vorgesehen, daß die Absperrorgane durch einen Prozeßleitrechner ansteuerbar sind. Dabei kann insbesondere vorgesehen sein, daß der Prozeßleitrechner zusammen mit den erfindungsgemäß vorgesehenen Absperrorganen einen Regelkreis bildet, so daß der die gesamte Anordnung durchfließende Volumenstrom in Abhängigkeit von einer Steuergröße, wie beispielsweise einem vorgegebenen Mindersolldruck, geregelt werden kann.

Alternativ dazu kann selbstverständlich vorgesehen sein, daß die einzelnen Absperrorgane manuell betätigbar sind, wodurch der Bauaufwand in den Fällen niedrig gehalten werden kann, in denen eine größere Bandbreite der Schwankungen eines Sollvolumenstroms zulässig sind.

Insbesondere kann erfindungsgemäß auch vorgesehen sein, den Zentrifugalabscheider mit seiner erfindungsgemäßen Ausgestaltung mit mehreren Einlaßöffnungen mit einem vorgeschalteten Feststoffilter zu kombinieren, wobei erfindungsgemäß insbesondere vorteilhafterweise vorgesehen ist, daß die das zu reinigende Medium führende Rohrleitung erst nach dem Feststoffilter verzweigt wird. Auf diese Weise wird der Bauaufwand weiter niedrig gehalten, da der Feststoffilter auf unterschiedliche Durchströmungsgeschwindigkeiten unempfindlich reagiert und die von ihm abzuscheidenden Feststoffpartikel unempfindlich gegenüber Zerstäubungseffekten sind. Stromab des Feststoffilters wird eine Rohrverzweigung vorgesehen, so daß eine Aufteilung des Gesamtvolumenstroms auf die zu den einzelnen Einlaßöffnungen des Zentrifugalabscheiders führenden Rohrleitungen ermöglicht wird.

In speziellen Fällen kann darüber hinaus vorgesehen sein, daß die Einlaßöffnungen des erfindungsgemäßen Zentrifugalabscheiders unterschiedliche Einlaßquerschnitte aufweisen, wodurch den Fällen Rechnung getragen werden kann, in denen bestimmte mengermäßige Teilvolumenströme zu den häufigeren Betriebszuständen der gesamten Vorrichtung gehören. Dies kann beispielsweise dann der Fall sein, wenn eine Erdgasversorgungsstation mehrere Verbraucher beliefert, von den einer häufiger abgeschaltet wird. In diesem Fall kann eine der Leitungen so ausgelegt sein, daß der durch sie fließende Teilvolumenstrom dem von dem jeweiligen abzuschaltenden Verbraucher entsprechenden Teilvolumenstrom entspricht. Entspricht beispielsweise dieser Teilvolumenstrom 1/3 des Gesamtvolumens, so kann eine Leitung vorgesehen sein, bzw. ein Einlaßquerschnitt, der 1/3 des Gesamtvolumenstroms proportional entspricht, während die verbleibenden - beispielsweise vier - Leitungen gleichmäßig aufgeteilt werden können, so daß diese jeweils 1/6 des Gesamtvolumenstroms fördern.

Die Erfindung ist vorzugsweise mit einem Zentrifugalabscheider auszuführen, bei dem die einzelnen Teilvolumenströme tangential eingeleitet werden und die Einlaßquerschnitte dementsprechend gleichmäßig verteilt an einem Umfang des Zentrifugalabscheiders angeordnet sind. Die Erfindung ist hierauf jedoch keineswegs beschränkt, sondern kann auch beispielsweise auf sogenannte Axialzyklone angewendet werden. Dabei kann ein erfindungsgemäßer Zentrifugalabscheider vertikal oder horizontal angeordnet sein.

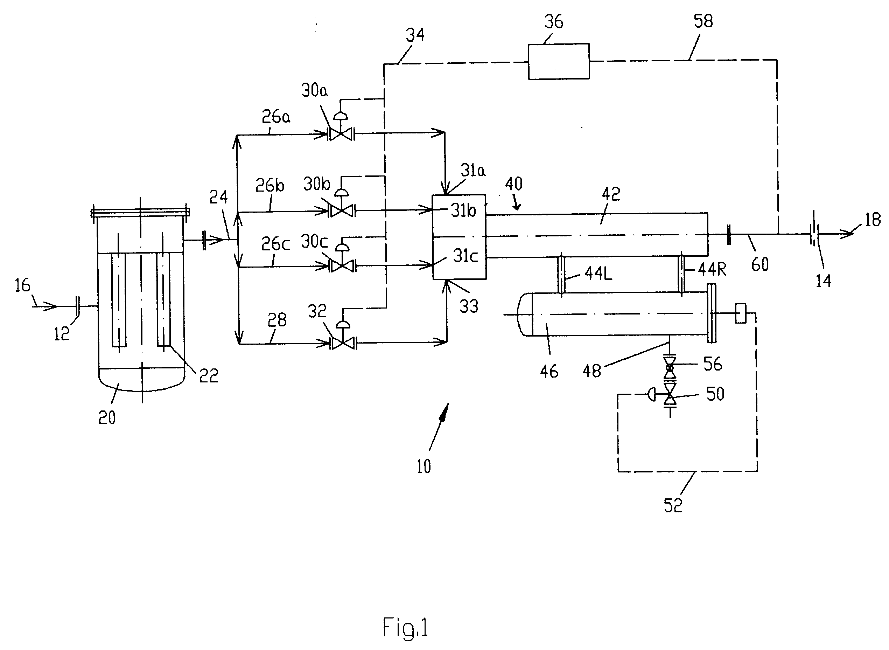

Die Erfindung wird im folgenden anhand eines in der Zeichnung dargestellten Ausführungsbeispieles näher erläutert. Die Zeichnung zeigt in ihrer einzigen Figur eine schematische Ansicht einer für eine Erdgasversorgungsstation bestimmten Druckregelstation mit einem integrierten Zentrifugalabscheider sowie einem vorgeschalteten Feststaubfilter.

Die gesamte Anlage 10 ist an entsprechenden Flanschen 12 und 14 in eine Rohrleitung eingefügt, die einen Zuleitungsabschnitt 16 und einen Ableitungsabschnitt 18 aufweist. Das zu reinigende Erdgas durchströmt zunächst einen Feststoffilter 20, in dem das durchströmende Gas mittels in diesem angeordneter Filterkerzen 22 von mitgeführten Staubpartikeln befreit wird. Nach dem Durchströmen des Feststoffilters 20 wird der Gesamtvolumenstrom mittels einer Rohrverzweigung 24 auf vier Rohrleitungen 26a-c, 28 verteilt. In den drei Teilleitungen 26a-c sind drei Absperrorgane 30a-c angeordnet, die beispielsweise elektromagnetisch betätigt werden können und jeweils lediglich zwischen zwei Zuständen, nämlich von einem voll geöffneten und einem absperrenden Zustand, hin und her schaltbar sind. In der Rohrleitung 28 ist hingegen ein Absperrorgan 32 angeordnet, das kontinuierlich verstellbar ausgebildet ist, so daß sich in der Rohrleitung 28 ein Volumenstrom einstellen läßt, der einen beliebigen Wert zwischen 0 und 1/4 des in der Zuleitung 16 fließenden maximalen Gesamtvolumenstroms entspricht.

Die drei Absperrorgane 30a-c sowie das kontinuierlich ansteuerbare Absperrorgan 32 sind über eine Signalleitung 34 mit einem Prozeßleitrechner 36 verbunden.

Die durch die Teilleitung 26a-c und 28 fließenden Teilvolumenströme fließen durch Einlaßöffnungen 31a-c, 33 in den Zentrifügalabscheider 40. Die Darstellung in der Figur ist schematisch zu verstehen, so ist beispielsweise bei einem mit tangentialen Einlaßöffnungen versehenen Zentrifugalabscheider vorgesehen, daß die Einlaßöffnungen 31a-c, 33 gleichmäßig am Umfang des Zentrifugalabscheiders angeordnet sind. Die aufgrund der Zentrifügalkräfte nach außen abgeschleuderten Flüssigkeitsteilchen sammeln sich an der Wandung 42 des Zentrifügalabscheiders und werden durch Ableitrohre 44 l, 44 r in einen Flüssigkeitssammelbehälter 46 abgeleitet. Der Flüssigkeitssammelbehälter 46 kann über eine Drainageleitung 48 entleert werden, die von einem automatisch gesteuerten Ventil 50 verschlossen ist. Das Ventil 50 wird über eine Leitung 52 angesteuert, die mit einem Flüssigkeitsstandsmelder 54 verbunden ist. Weiterhin kann mit dem Ventil 50 ein von Hand betätigbares Ventil 56 vorgesehen sein, mit dem eine Absperrung zu Wartungszwecken o.ä. vorgenommen werden kann.

Der Prozeßleitrechner 36 ist über eine Datenerfassungsleitung 58 mit einem stromabwärts des Zentrifügalabscheiders 40 liegenden Rohrabschnitt 60 verbunden. Mit dem Rohrabschnitt kann beispielsweise ein Druckaufnehmer angeordnet sein. In Abhängigkeit von einem vorgegebenen Sollwert ermittelt der Prozeßleitrechner 36 Signale, mit denen die Absperrorgane 30a-c so angesteuert werden, daß sie entweder vollständig geöffnet oder geschlossen sind, während das kontinuierlich arbeitende Absperrorgan 32 so angesteuert wird, daß sich der gewünschte Gesamtvolumenstrom ergibt. Über den Prozeßleitrechner 36 ergibt sich also ein geschlossener Regelkreis, wodurch der Gesamtvolumenstrom, der durch den Zentrifugalabscheider durchgesetzt wird, geregelt werden kann, ohne daß die eingangs erwähnten nachteiligen Effekte auftreten, die mit einer Querschnittsdrosselung in einer für den maximalen Gesamtvolumenstrom ausgelegten Rohrleitung auftreten.

### BEZUGSZEICHENLISTE

- 10: Druckregelstation
- 12: Flansch
- 14: Flansch
- 16: Zuleitung
- 18: Ableitung
- 20: Feststoffilter
- 22: Filterkerze
- 24: Leitung
- 26a-26c: Teilleitung
- 28: Teilleitung
- 30a-30c: Absperrorgan, zweistufig
- 31a-31c: Einlaßöffnung
- 32: Absperrorgan, kontinuierlich steuerbar
- 33: Einlaßöffnung
- 34: Signalleitung
- 36: Prozeßleitrechner
- 40: Zentrifügalabscheider
- 42: Wandung (von 40)
- 44l, 44r: Abflußleitungen
- 46: Flüssigkeitssammelbehälter
- 48: Drainageleitung
- 50: Abspertventil (von 48)
- 52: Steuerleitung
- 54: Füllstandsanzeiger
- 56: Absperrorgan (in 48)
- 58: Signalleitung
- 60: Leitungsabschnitt (von 18)

## Patentansprüche

1. Zentrifugalabscheider mit Rohrleitungen (26a-c, 28) sowie mit mindestens zwei an diese Rohrleitungen angeschlossene separate Einlaßöffnungen (31a-c, 33), zum Abscheiden von Partikeln oder Tropfen eines dichteren Stoffes aus einem zu reinigenden, flüssigen oder gasförmigen Trägermedium, insbesondere zum Abscheiden von Flüssigkeitstropfen aus einem Gas, wobei Mittel in diesen Rohrleitungen (26a-c, 30) zum Regeln des Volumenstromes des zu reinigenden Mediums vorgesehen sind, dadurch gekennzeichnet,
daß die Mittel zum Regeln des Volumenstroms in den Rohrleitungen (26a-c, 28) angeordnete Absperrorgane (30a-c, 32) sind, wobei jeder Einlaßöffnung (31a-c, 33) ein Absperrorgan (30a-c, 32) zugeordnet ist, und
daß die Einlaßöffnungen (31a-c, 33) unabhängig voneinander geöffnet oder geschlossen werden können,
wobei ein Absperrorgan (32) so ausgebildet ist, daß der Querschnitt einer Einlaßöffnung (33) kontinuierlich vergrößert oder verkleinert werden kann, und
wobei mindestens ein weiteres Absperrorgan (30a-c) lediglich zwei Stellungen, nämlich eine Absperrstellung und eine Durchflußstellung, aufweist, so daß der Querschnitt einer anderen Einlaßöffnung (31a-c) vollständig geschlossen oder geöffnet werden kann.

2. Zentrifugalabscheider nach Anspruch 1, dadurch gekennzeichnet, daß der Zentrifugalabscheider (40) eine Vielzahl von Einlaßöffnungen (31a-c, 33) und zugeordneten Rohrleitungen (26a-c, 28) aufweist und daß genau ein Absperrorgan (32) kontinuierlich verstellbar ausgebildet ist und daß die anderen Absperrorgane (30a-c) zwischen einer Absperrstellung und einer Durchflußstellung schaltbar sind.

3. Zentrifugalabscheider nach einem der vorhergehenden Ansprüche, dadurch gekennzeichnet, daß die Absperrorgane (30a-c, 32) durch einen Prozeßleitrechner (56) ansteuerbar sind.

4. Zentrifugalabscheider nach einem der Ansprüche 1-3, dadurch gekennzeichnet, daß die Absperrorgane (30a-c, 32) manuell betätigbar ausgebildet sind.

5. Vorrichtung zum Abscheiden von Partikeln und Tropfen eines dichteren Stoffes aus einem zu reinigenden Gas, insbesondere zum Abscheiden von Staub sowie Wasser- und Öltropfen aus komprimierter Luft oder Erdgas, mit einem in einer Rohrleitung (16, 24) angeordneten Feststoffilter (20) und mit einem stromab des Feststoffilters angeordneten Zentrifügalabscheider (40) zum Abscheiden von Flüssigkeitstropfen, dadurch gekennzeichnet,
daß die Rohrleitung (24) zwischen Feststoffilter (20) und Zentrifügalabscheider (40) in mehrere Einzelrohrleitungen (26a-c, 28) verzweigt,
daß der Zentrifügalabscheider (40) eine der Anzahl der Einzelrohrleitungen entsprechende Anzahl von separaten Einlaßöffnungen (31a-c, 33) aufweist,
daß jeder Einlaßöffnung (31a-c, 33) ein Absperrorgan (30a-c, 32) zugeordnet ist, und
daß die Einlaßöffnungen (31a-c, 33) unabhängig voneinander geöffnet oder verschlossen werden können, wobei ein Absperrorgan (32) so ausgebildet ist, daß der Querschnitt einer Einlaßöffnung (33) kontinuierlich vergrößert oder verkleinert werden kann, und wobei mindestens ein weiteres Absperrorgan (30a-c) lediglich zwei Stellungen, nämlich eine Absperrstellung und eine Durchflußstellung, aufweist.

6. Zentrifugalabscheider nach einem der vorhergehenden Ansprüche dadurch gekennzeichnet, daß die Einlaßöffnungen (31a-c, 33) unterschiedliche Querschnittsflächen aufweisen.

7. Zentrifugalabscheider nach einem der vorhergehenden Ansprüche, dadurch gekennzeichnet, daß der Zentrifügalabscheider aus mehreren Einzelabscheidern kleineren Durchmessers aufgebaut ist.

8. Verfahren zum Einstellen des einen mit einer Vielzahl von separaten Einlaßöffnungen versehenen Zentrifugalabscheider durchfließenden Volumenstroms, wobei die Einlaßöffnungen (31a-c,33) und die mit ihnen verbundenen Rohrleitungen (26a-c,28) gleiche oder unterschiedliche Querschnitte aufweisen und der Querschnitt genau einer Einlaßöffnung (33) kontinuierlich vergrößerbar oder verkleinerbar ist, dadurch gekennzeichnet, daß die größtmögliche ganzzahlige Anzahl an Einlaßöffnungen (31a-c) vollständig geöffnet wird und daß die Differenzen zwischen dem einzustellenden Volumenstrom und dem Volumenstrom, der durch die vollständig geöffneten Einlaßöffnungen gebildet wird, durch teilweises Öffnen der kontinuierlich einstellbaren Einlaßöffnung (33) erzeugt wird.

## Claims

1. Centrifugal separator having pipelines (26a-c, 28) and having at least two separate inlet openings (31a-c, 33), which are connected to the pipelines, for the separation of particles or drops of a denser material from a fluid or gaseous carrier medium to be cleaned, in particular for the separation of drops of fluid from a gas, means being provided in those pipelines (26a-c, 30) for the regulation of the volume flow of the medium to be cleaned, characterised in that,
the means for the regulation of the volume flow are shut-off members (30a-c, 32), which are arranged in the pipelines (26a-c, 28), one shut-off member (30a-c, 32) being associated with each inlet opening (31a-c, 33), and
in that the inlet openings (31a-c, 33) can be opened or closed independently of one another,
a shut-off member (32) being in a form such that the cross-section of an inlet opening (33) can be continuously increased or decreased, and
at least one other shut-off member (30a-c) having only two positions, that is, a shut-off position and a flow-through position, so that the cross-section of another inlet opening (31a-c) can be completely closed or opened.

2. Centrifugal separator according to claim 1, characterised in that the centrifugal separator (40) has a plurality of inlet openings (31a-c, 33) and associated pipelines (26a-c, 28), and in that exactly one shut-off member (32) is designed to be continuously adjustable, and in that the other shut-off members (30a-c) can be switched between a shut-off position and a flow-through position.

3. Centrifugal separator according to either of the preceding claims, characterised in that the shut-off members (30a-c, 32) are controllable by a process control computer (56).

4. Centrifugal separator according to any one of claims 1 to 3, characterised in that the shut-off members (30a-c, 32) are designed to be manually actuatable.

5. Apparatus for the separation of particles and drops of a denser material from a gas to be cleaned, in particular for the separation of dust and drops of water and oil from compressed air or natural gas, the apparatus having a solids filter (20), arranged in a pipeline (16, 24), and having a centrifugal separator (40), which is arranged downstream of the solids filter, for the separation of drops of fluid, characterised in that
the pipeline (24) between the solids filter (20) and the centrifugal separator (40) branches into several branch pipelines (26a-c, 28),
in that the centrifugal separator (40) has a number of separate inlet openings (31a-c, 33) which corresponds to the number of branch pipelines,
in that one shut-off member (30a-c, 32) is associated with each inlet opening (31a-c, 33), and
in that the inlet openings (31a-c, 33) can be opened or closed independently of one another, one shut-off member (32) being in a form such that the cross-section of one inlet opening (33) can be continuously increased or decreased, and at least one other shut-off member (30a-c) having only two positions, that is, a shut-off position and a flow-through position.

6. Centrifugal separator according to any one of the preceding claims, characterised in that the inlet openings (31a-c, 33) have different cross-sectional areas.

7. Centrifugal separator according to any one of the preceding claims, characterised in that the centrifugal separator is composed of several individual separators of small diameter.

8. Method for the adjustment of the volume flow passing through a centrifugal separator provided with a plurality of separate inlet openings, the inlet openings (31a-c, 33) and the pipelines (26a-c, 28) connected thereto having identical or different cross-sections and the cross-section of exactly one inlet opening (33) being able to be continuously increased or decreased, characterised in that the largest possible whole number of inlet openings (31a-c) are completely opened and in that the difference between the volume flow to be adjusted and the volume flow which is produced by the completely opened inlet openings is produced by partial opening of the continuously adjustable inlet opening (33).

## Revendications

1. Séparateur centrifuge comprenant des conduites rigides (26a-c, 28), ainsi qu'au moins deux ouvertures d'entrée séparées (31a-c, 33) raccordées à ces conduites rigides pour la séparation de particules ou de gouttes d'une substance plus dense à partir d'un milieu de support liquide ou gazeux à purifier, en particulier pour la séparation de gouttes de liquide à partir d'un gaz, des moyens étant prévus dans ces conduites rigides (26a-c, 30) pour régler le courant volumique du milieu à purifier, caractérisé
en ce que les moyens pour régler le courant volumique dans les conduites rigides (26a-c, 28) sont des organes d'arrêt (30a-c, 32) disposés dans les conduites rigides (26a-c, 28), un organe d'arrêt (30a-c, 32) étant attribué à chaque ouverture d'entrée (31a-c, 33), et
en ce que les ouvertures d'entrée (31a-c, 33) peuvent être ouvertes ou fermées indépendamment l'une de l'autre,
dans lequel un organe d'arrêt (32) est réalisé de telle sorte que la section transversale d'une ouverture d'entrée (33) peut être agrandie ou rétrécie en continu, et
dans lequel au moins un organe d'arrêt supplémentaire (30a-c) présente seulement deux positions, plus précisément une position d'arrêt et une position de passage, si bien que la section transversale d'une autre ouverture d'entrée (31a-c) peut être complètement fermée ou complètement ouverte.

2. Séparateur centrifuge selon la revendication 1, caractérisé en ce que le séparateur centrifuge (40) présente une multitude d'ouvertures d'entrée (31 a-c, 33) et de conduites rigides correspondantes (26a-c, 28), et en ce que précisément un organe d'arrêt (32) est réalisé pour pouvoir être réglé en continu et en ce que les autres organes d'arrêt (30a-c) peuvent être commutés entre une position d'arrêt et une position de passage.

3. Séparateur centrifuge selon l'une quelconque des revendications précédentes, caractérisé en ce que les organes d'arrêt (30a-c, 32) peuvent être commandés par un ordinateur de contrôle des processus industriels (56).

4. Séparateur centrifuge selon l'une quelconque des revendications 1 à 3, caractérisé en ce que les organes d'arrêt (30a-c, 32) sont réalisés pour être commandés à la main.

5. Dispositif pour la séparation de particules et de gouttes d'une substance plus dense à partir d'un gaz à purifier, en particulier pour la séparation de poussières, ainsi que de gouttes d'eau et d'huile à partir d'air comprimé ou de gaz naturel comprimé, comprenant un filtre (20) pour les substances solides disposés dans une conduite (16, 24) et comprenant un séparateur centrifuge (40) disposé en aval du filtre pour les substances solides, pour la séparation de gouttes de liquide, caractérisé
en ce que la conduite (24) se ramifie en plusieurs conduites rigides individuelles (26a-c, 28) entre le filtre (20) pour les substances solides et le séparateur centrifuge (40),
en ce que le séparateur centrifuge (40) présente un nombre d'ouvertures d'entrée séparées (31a-c, 33) correspondant au nombre des conduites rigides individuelles,
en ce qu'un organe d'arrêt (30a-c, 32) est attribué à chaque ouverture d'entrée (31a-c, 33), et
en ce que les ouvertures d'entrée (31a-c, 33) peuvent être ouvertes ou fermées indépendamment l'une de l'autre, dans lequel un organe d'arrêt (32) est réalisé de telle sorte que la section transversale d'une ouverture d'entrée (31a-c, 33) peut être agrandie ou rétrécie en continu et dans lequel au moins un organe d'arrêt supplémentaire (30a-c) présente seulement deux positions, plus précisément une position d'arrêt et une position de passage.

6. Séparateur centrifuge selon l'une quelconque des revendications précédentes, caractérisé en ce que les ouvertures d'entrée (31a-c, 33) présentent des superficies de la section différentes.

7. Séparateur centrifuge selon l'une quelconque des revendications précédentes, caractérisé en ce que le séparateur centrifuge est constitué par plusieurs séparateurs individuels de diamètre inférieur.

8. Procédé pour le réglage du courant volumique s'écoulant à travers un séparateur centrifuge muni d'une multitude d'ouvertures d'entrée séparées, dans lequel les ouvertures d'entrée (31a-c, 33) et les conduites rigides (26a-c, 28) qui leur sont reliées présentent des sections transversales identiques ou différentes, la section transversale de précisément une ouverture d'entrée (33) pouvant être agrandie ou rétrécie en continu, caractérisé en ce que le nombre entier le plus élevé possible d'ouvertures d'entrée (31a-c) sont ouvertes en continu et en ce que la différence entre le courant volumique à régler et le courant volumique, qui se forme via les ouvertures d'entrée complètement ouvertes, est générée en ouvrant partiellement l'ouverture d'entrée (33) qui peut être réglée en continu.
